# EUROPEAN PATENT SPECIFICATION

(11) **EP 3 422 206 B1**
(45) Date of publication and mention of the grant of the patent: **22.05.2019**
(21) Application number: 17178243.6
(22) Date of filing: 27.06.2017
(51) Int. Cl.: G06F 16/27, G06F 16/901

(54) **METHOD FOR AN ENHANCED MANAGEMENT OF CONFIGURATION INFORMATION AND/OR STATEFUL INFORMATION IN A COMMUNICATION NETWORK, SYSTEM, PROGRAM AND COMPUTER PROGRAM PRODUCT**
VERFAHREN ZUR VERBESSERTEN VERWALTUNG VON KONFIGURATIONSINFORMATIONEN UND/ODER ZUSTANDSBEHAFTETEN INFORMATIONEN IN EINEM KOMMUNIKATIONSNETZWERK, SYSTEM, PROGRAMM UND COMPUTERPROGRAMMPRODUKT
PROCÉDÉ DE GESTION AMÉLIORÉE D'INFORMATIONS DE CONFIGURATION ET/OU D'INFORMATIONS DYNAMIQUES DANS UN RÉSEAU DE COMMUNICATION, SYSTÈME, PROGRAMME ET PRODUIT-PROGRAMME INFORMATIQUE

(43) Date of publication of application: 02.01.2019
(73) Proprietor: Deutsche Telekom AG, 53113 Bonn (DE)
(72) Inventor: SCHATZMAYR, Rainer, 53229 Bonn (DE); AGAPI, Andrei, 1064CN Amsterdam (NL)
(74) Representative: Schwöbel, Thilo K.

(56) References cited:
- US-A1- 2014 114 910
- US-B1- 9 031 994

## Description

### BACKGROUND

The present invention relates a method for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality are transmitted using a data modeling language with a graph-like or tree-like data structure, wherein the query messages comprise graphs referencing vertices stored in the plurality of database entities, wherein a specific graph of a specific query message comprises references to at least two vertices.

Furthermore, the present invention relates to a system for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality are transmittable using a data modeling language with a graph-like or tree-like data structure, wherein the query messages comprise graphs referencing vertices stored in the plurality of database entities, wherein a specific graph of a specific query message comprises references to at least two vertices.

Additionally, the present invention relates to a program comprising a computer readable program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

Additionally, the present invention relates to a computer program product for an enhanced management of configuration information and/or stateful information in a communication network, the computer program product comprising a computer program stored on a storage medium, the computer program comprising program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

For the management of configuration information and/or stateful information in a communication network, network nodes need to be able to receive configuration data and changes of configuration data from databases as well as write stateful data into the databases/stores. Therein, the handling of query messages is extremely important. A typical, non-limiting example of a data modeling language with a graph-like or tree-like data structure employed for query messages is YANG ("yet another next generation"), which is a data modeling language for the definition of data sent over the NETCONF network configuration protocol. Existing systems have the problem that the storage of vertices referenced/addressed in the query messages is not efficient such that the handling of the query messages involves increased workload. Patent publication US9031994B1 discloses techniques for improved database partitioning in a data processing system.

### SUMMARY

An object of the present invention is to provide an improved method for an enhanced management of configuration information and/or stateful information in a communication network, wherein an improved storage/database functionality is provided such that the required resources for routing and/or answering query messages are minimized.

The object of the present invention is achieved by a method for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality are transmitted using a data modeling language with a graph-like or tree-like data structure, wherein the query messages comprise graphs referencing vertices stored in the plurality of database entities, wherein a specific graph of a specific query message comprises references to at least two vertices, wherein the at least two vertices referenced in the specific graph are distributed within a group of initial graph partitions across the database entities of the NoSQL database functionality by the following steps:
-- in a first step, a plurality of query messages is tracked and analyzed by a query profile module, wherein the query profile module generates workload information for a specific vertex referenced in the specific graph of the specific query message of the plurality of query messages associated to storing the specific vertex on a specific database entity out of the plurality of database entities, wherein the workload information for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition, the workload information is additionally a function of a communication cost value associated with hopping/transitioning to a vertex in a different graph partition,
-- in a second step - after the first step - in dependence of the workload information, a partitioning of the specific graph into a group of initial graph partitions is performed by a graph partitioning module, wherein each graph partition of the group of initial graph partitions is distributed to at least one different database entity of the plurality of database entities, and/or
wherein the at least two vertices referenced in the specific graph are distributed within a group of modified graph partitions across the database entities of the NoSQL database functionality by the following steps:
-- in a first step, a plurality of query messages is tracked and analyzed by a query profile module, wherein the query profile module generates workload information for a specific vertex referenced in the specific graph of the specific query message of the plurality of query messages associated to storing the specific vertex on a specific database entity out of the plurality of database entities, wherein the workload information for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition, the workload information is additionally a function of a communication cost value associated with hopping/transitioning to a vertex in a different graph partition,
-- in a second step - after the first step - in dependence of the workload information, a partitioning of the specific graph into a group of modified graph partitions is performed by a graph partitioning module, wherein each graph partition of the group of modified graph partitions is distributed to at least one different database entity of the plurality of database entities,
wherein a further query message, transmitted from a specific network node of the plurality of network nodes and directed either
-- at editing and/or writing and/or retrieving stateful information in and/or from the NoSQL database functionality or
-- at retrieving configuration information from the NoSQL database functionality, is handled by the following steps:
-- in a third step - after the second step - the further query message is transmitted from the specific network node with the help of a query router module, wherein the query router module routes the further query message to the database entity comprising at least one graph partition of the graph of the further query message,
-- in a fourth step - after the third step - the further query message is received by specific database entity comprising at least one graph partition of the graph of the further query message, wherein, with the help of a query handler module having access to the NoSQL database functionality, the further query message is solved and/or answered.

According to the present invention, it is thereby advantageously possible to employ a (highly) distributed database functionality (the NoSQL database functionality) for an enhanced management of configuration information and/or stateful information in a communication network, wherein query messages between the plurality of network nodes and the NoSQL database functionality are transmitted using a data modeling language with a graph-like or tree-like data structure. In particular, it is possible that vertices (at least two vertices or more than two vertices) that are referenced in a specific graph of a specific query message are distributed among a group of graph partitions (an initial group of graph partitions and/or a modified group of graph partitions) across different database entities which are part of the NoSQL (Not only SQL, Not only structured query language) database functionality as part of a first step and a second step. Thereby, it is advantageously possible to reduce the number of network hops (between different database entities) needed to solve a query message.

In case the at least two vertices referenced in the specific graph are distributed within a group of initial graph partitions across the database entities of the NoSQL database functionality, it is advantageously possible that the plurality of query messages is a typical (especially an estimated) set of query messages. By tracking and analyzing such a plurality of query messages in a first step, it is possible that workload information for a specific vertex referenced (or comprised) in the specific graph of the specific query message of the plurality of query messages is generated by a query profile module. It is preferably possible that (respective) workload information for many (or all) vertices referenced (or comprised in a) specific graph of the specific query message of the plurality of query messages is generated by the query profile module. It is possible that the generated workload information is a measure for the workload (or the amount of required resources) when handling/routing the plurality of query messages associated to storing the specific vertex on a specific database entity (and/or the specific vertex in a specific graph partition on a specific database entity). It is advantageously possible that the workload and/or the amount of resources required for routing/handling/answering the plurality of query messages is minimized because in dependence of the workload information, a partitioning of the specific graph into a group of initial graph partitions (and preferably a partitioning of many graphs into groups of initial graph partitions) is performed by a graph partitioning module, wherein each graph partition of the group of initial graph partitions is distributed to at least one different database entity of the plurality of database entities in a second step.

Alternatively or additionally it is advantageously possible to optimize/enhance the partitioning in a first step and second step. Therein the at least two vertices referenced in the specific graph are distributed within a group of modified graph partitions across the database entities of the NoSQL database functionality. In this case, it is possible that the plurality of query messages is a typical set of query messages arising during operation of the system (during the exchange of query messages between network nodes and the NoSQL database functionality). By tracking and analyzing such a plurality of query messages in a first step, it is possible that workload information for a specific vertex referenced (or comprised) in the specific graph of the specific query message of the plurality of query messages is generated by a query profile module. It is preferably possible that (respective) workload information for many (or all) vertices referenced (or comprised in a) specific graph of the specific query message of the plurality of query messages is generated by the query profile module. It is possible that the generated workload information is a measure for the workload (or the amount of required resources) when handling/routing the plurality of query messages associated to storing the specific vertex on a specific database entity (and/or the specific vertex in a specific graph partition on a specific database entity). It is advantageously possible that the workload and/or the amount of resources required for routing/handling/answering the plurality of query messages is minimized because in dependence of the workload information, a partitioning of the specific graph into a group of modified graph partitions (and preferably a partitioning of many graphs into groups of modified graph partitions) is performed by a graph partitioning module, wherein each graph partition of the group of modified graph partitions is distributed to at least one different database entity of the plurality of database entities in a second step. Therein, it is especially possible that a group of initial graph partitions is changed, such that the graph partitioning is adapted to the plurality of query messages arising during operation of the system (during the exchange of query messages between network nodes and the NoSQL database functionality).

According to the present invention, after the partitioning in the second step is done, it is possible that a further query message, transmitted from a specific network node of the plurality of network nodes (and typically many further query messages from many different network nodes), directed at editing/writing/retrieving stateful information in and/or from the NoSQL database functionality or at retrieving configuration information from the NoSQL database functionality is handled in an efficient manner by a third step and a fourth step.

According to the present invention, it is advantageously possible that a message exchange of query messages using a graph-like or tree-like data structure between a plurality of network nodes and a NoSQL database functionality is handled more efficiently because the vertices referenced in the graphs of the query messages of the plurality of query messages (or at least the specific vertex referenced in the specific graph of the specific query message of the plurality of query messages) are distributed among a plurality of database entities that are part of the NoSQL database functionality in an efficient way such that, when handling a (further) query message, a reduced of amount of database entities of the plurality of database entities is involved in handling the (further) query message. Therein, it is advantageously possible to realize a distributed database functionality for a communication network, wherein network nodes employ query messages with a graph-like or tree-like data structure.

According to the present invention, it is advantageously possibly that a network-wide configuration store (database functionality) is realized, wherein features such as N-way master-less replication, multi-datacenter deployment, handling of consistency versus availability issues in face of network partitions, linear scale-out properties and high throughput are achievable.

According to an embodiment of the present invention, the query router module is at least partly comprised in or associated with the specific network node.

It is advantageously possible according to an embodiment of the present invention that the query router module (or parts thereof) is partly comprised in or associated with many (or all) network nodes of the plurality of network nodes.

According to an embodiment of the present invention, the query profile module is at least partly comprised in or associated with the specific database entity, wherein especially the query profile module is partly comprised in or associated with each database entity of the plurality of database entities, wherein the graph partitioning module is at least partly comprised in or associated with the specific database entity, wherein especially the graph partitioning module is partly comprised in or associated with each database entity of the plurality of database entities, wherein query handler module is at least partly comprised in or associated with the specific database entity, wherein especially the query handler module is partly comprised in or associated with each database entity of the plurality of database entities.

It is advantageously possible according to an embodiment of the present invention that the query profile module is partly comprised in or associated with many database entities of the plurality of database entities. It is additionally or alternatively possible that the graph partitioning module is partly comprised in or associated with many database entities of the plurality of database entities. It is additionally or alternatively possible that the query handler module is partly comprised in or associated with many database entities of the plurality of database entities. It is possible that the query profile module, the graph partitioning module and the query handler module (or parts thereof) are bundled together at a database entity, either as local processes communicating over local sockets or as linked-in libraries or extensions of the database functionality application programming interface (API) (e.g., a Cassandra API).

According to an embodiment of the present invention, the workload information for the specific vertex is further a function of a cost value associated to answering the query messages of the plurality of query messages referencing the specific vertex, wherein especially each query message of the plurality of query messages is weighted with a predefined relative importance value.

Thereby, it is advantageously possible according to an embodiment of the present invention that the vertices referenced in the graphs of query messages of the plurality of query messages are distributed among a plurality of database entities that are part of the NoSQL database functionality in a further enhanced way.

According to an embodiment of the present invention, the data modeling language with a graph-like or tree-like data structure is YANG and the NoSQL database functionality is a Cassandra-based NoSQL database functionality.

Thereby it is possible according to an embodiment of the present invention that a highly scalable and distributed database functionality is employed.

According to an embodiment of the present invention, the partitioning of the specific graph into the group of initial graph partitions during the second step is performed such that a workload indicated by the workload information is minimized.

Thereby, it is advantageously possible that the workload and/or the amount of resources required for routing/handling/answering the plurality of query messages is minimized in an enhanced way.

According to an embodiment of the present invention, in the first step workload information for a further specific vertex referenced in the specific graph is generated analogous to the generation of the workload information for the specific vertex, wherein especially in the first step workload information for each specific vertex referenced in the specific graph is generated analogous to the generation of the workload information for the specific vertex.

It is possible according to an embodiment of the present invention that in the first step workload information for a plurality of further specific vertices referenced in the specific graph is generated analogous to the generation of the workload information for the specific vertex.

According to an embodiment of the present invention, in the first step workload information for each vertex referenced in any of the graphs of the plurality of query messages is generated analogous to the generation of the workload information for the specific vertex, wherein the partitioning of each graph of the plurality of query messages into a respective group of initial graph partitions and/or a respective group of modified graph partitions - in the second step - is performed analogous to the partitioning of the specific graph into the group of initial graph partitions and/or the group of modified graph partitions.

According to an embodiment of the present invention, after the second step either:
-- the specific vertex is comprised in only one initial graph partition or modified graph partition or
-- the specific vertex is comprised in a plurality of initial graph partitions or modified graph partitions.

Thereby, it is possible according to an embodiment of the present invention that a specific vertex might by comprised in more than one initial graph partition or modified graph partition. Additionally or alternatively, it is possible that a further specific vertex is comprised in only one initial graph partition or modified graph partition.

According to an embodiment of the present invention, the partitioning in the second step is performed utilizing a basic partition cut, a complementary partition cut and/or redundant partitioning.

The object of the present invention is also achieved by system for an enhanced management of configuration information and/or stateful information in a communication network, wherein the communication network comprises a plurality of network and a distributed NoSQL database functionality, wherein the distributed NoSQL database functionality comprises a plurality of database entities, wherein query messages between the plurality of network nodes and the NoSQL database functionality are transmittable using a data modeling language with a graph-like or tree-like data structure, wherein the query messages comprise graphs referencing vertices stored in the plurality of database entities, wherein a specific graph of a specific query message comprises references to at least two vertices,
wherein the system is configured to distribute the at least two vertices referenced in the specific graph within a group of initial graph partitions across the database entities of the NoSQL database functionality by:
-- a query profile module is configured to track and analyze a plurality of query, wherein the query profile module is configured to generate workload information for a specific vertex referenced in the specific graph of the specific query message of the plurality of query messages associated to storing the specific vertex on a specific database entity out of the plurality of database entities, wherein the workload information for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition, the workload information is additionally a function of a communication cost value associated with hopping/transitioning to a vertex in a different graph partition,
-- in dependence of the workload information, a graph partitioning module is configured to perform a partitioning of the specific graph into a group of initial graph partitions, wherein each graph partition of the group of initial graph partitions is configured to be distributed to at least one different database entity of the plurality of database entities,
and/or
wherein the system is configured to distribute the at least two vertices referenced in the specific graph within a group of modified graph partitions across the database of the NoSQL database functionality by:
-- a query profile module is configured to track and analyze a plurality of query, wherein the query profile module is configured to generate workload information for a specific vertex referenced in the specific graph of the specific query message of the plurality of query messages associated to storing the specific vertex on a specific database entity out of the plurality of database entities, wherein the workload information for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition, the workload information is additionally a function of a communication cost value associated with hopping/transitioning to a vertex in a different graph partition,
-- in dependence of the workload information, a graph partitioning module is configured to perform a partitioning of the specific graph into a group of modified graph partitions, wherein each graph partition of the group of modified graph partitions is configured to be distributed to at least one different database entity of the plurality of database entities,
wherein the system is configured to handle a further query message, transmittable from a specific network node of the plurality of network nodes and directed either
-- at editing and/or writing and/or retrieving stateful information in and/or from the NoSQL database functionality or
-- at retrieving configuration information from the NoSQL database functionality, by:
-- the further query message is configured to be transmitted from the specific network node with the help of a query router module, wherein the query router module is configured to route the further query message to the database entity comprising at least one graph partition of the graph of the further query message,
-- the further query message is configured to be received by specific database entity comprising at least one graph partition of the graph of the further query message, wherein, with the help of a query handler module having access to the NoSQL database functionality, the further query message is configured to be solved and/or answered.

Additionally, the object of the present invention is achieved by program comprising a computer readable program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

Additionally, the object of the present invention is achieved by computer program product for an enhanced management of configuration information and/or stateful information in a communication network, the computer program product comprising a computer program stored on a storage medium, the computer program comprising program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

The inventive system, program and computer program product share the advantages described for the inventive method and embodiments of the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a system according to an embodiment of the present invention.
**Figure 2** schematically illustrates a specific network node of the plurality of network nodes according to an embodiment of the present invention.
**Figure 3** schematically illustrates a specific database entity of the plurality of database entities according to an embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

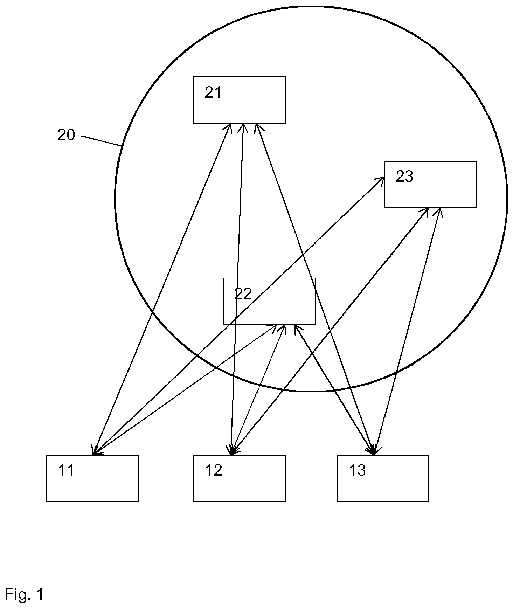

In **Figure 1****,** a system for an enhanced management of configuration information and/or stateful information in a communication network according to an embodiment of the present invention is schematically illustrated. The system comprises the communication network, wherein the communication network comprises a plurality of network nodes 11, 12, 13 and a distributed NoSQL database functionality 20. The distributed NoSQL database functionality 20 comprises a plurality of database entities 21, 22, 23, which may or may not be physically separated from each other (e.g., at different locations). Query messages are transmittable between the plurality of network nodes 11, 12, 13 and the NoSQL database functionality 20 employing a data modeling language with a graph-like or tree-like data structure, especially YANG. Such query message can, e.g., be directed at editing and/or writing and/or retrieving stateful information in and/or from the NoSQL database functionality 20 or at retrieving configuration information from the NoSQL database functionality 20. Therein, communication links between the plurality of network node 11, 12, 13 and the plurality of database entities 21, 22, 23 exist. It is also possible that there are communication links between different database entities 21, 22, 23 of the plurality of database entities 21, 22, 23 (not shown) and between different network nodes 11, 12, 13 of the plurality of network nodes 11, 12, 13 (not shown).

According to an embodiment of the present invention, it is possible that the at least two vertices referenced in the specific graph are distributed within a group of initial graph partitions 400 across/among the database entities 21, 22, 23 of the NoSQL database functionality 20 by a first and second step. In the first step, a plurality of query messages is tracked and analyzed by a query profile module 30, which is preferably partly comprised in each database entity 21, 22, 23, wherein the query profile module 30 generates workload information 300 for a specific vertex referenced in the specific graph of the specific query message of the plurality of query messages associated to storing the specific vertex on a specific database entity 21 out of the plurality of database entities 21, 22, 23. The workload information 300 for the specific vertex is a function of the number of query messages of the plurality of query messages referencing the specific vertex, the frequency of query messages of the plurality of query messages referencing the specific vertex, a cost value associated to answering all query messages of the plurality of query messages referencing the specific vertex and, in case the specific vertex is the first or last vertex of a graph partition 400 (i.e., an edge), the workload information 300 is additionally a function of a communication cost value associated with hopping/transitioning to a vertex in a different graph partition 400. In the second step - after the first step - in dependence of the workload information 300, a partitioning of the specific graph into a group of initial graph partitions 400 is performed by a graph partitioning module 40, which is preferably partly comprised in each database entity 21, 22, 23. Therein, each graph partition of the group of initial graph partitions 400 is distributed to at least one different database entity 21, 22, 23 of the plurality of database entities 21, 22, 23. The distribution is done such that the workload/cost/amount of resources and/or potentially time, associated to handling/routing/answering the plurality of query messages is minimized, by minimizing the workload/cost/amount of resources and/or potentially time indicated by the workload information. The first and second steps can also be performed for a group of modified graph partitions 400 instead of the group of initial graph partitions 400, as described above. It is thereby advantageously possible according to the present invention to employ a group of query messages in the first and second step that arises during operation of the system, i.e., during normal communication between the plurality of network nodes 11, 12, 13 and the plurality of database entities 21, 22, 23, when distributing the vertices referenced in the specific graph within a group of modified graph partitions 400. Therein by the first and second step, the partitioning is done such that a further query message, transmitted from a specific network node 11 of the plurality of network nodes 11, 12, 13 and directed at editing and/or writing and/or retrieving stateful information in and/or from the NoSQL database functionality 20 or at retrieving configuration information from the NoSQL database functionality 20, is handled by a third and fourth step. In the third step - after the second step - the further query message is transmitted from the specific network node 11 with the help of a query router module 50, which is at least partly comprised in or associated with the specific network 11, wherein the query router module 50 routes the further query message to the database entity 21, 22, 23 comprising at least one graph partition 400 of the graph of the further query message. Therein, it is possible that query router module 50 is aware of the portioning (e.g., by having access to a query routing map 100, in which information on the partitioning of the group of initial graph partitions 400 and/or the group of modified graph partitions 400 is stored/comprised), i.e., is aware of which vertex is stored in which graph partition and where on which database entity 21, 22, 23, the respective graph partition is located. Therein, it is possible that the further query message is directly routed by the query router module 50 to the correct specific database entity 21, 22, 23. In a fourth step - after the third step - the further query message is received by the specific database entity 21, 22, 23, comprising at least one graph partition 400 of the graph of the further query message, wherein the further query message is especially received by a query handler module 60, which partly comprised in or associated with the specific database entity 21, 22, 23. With the help of a query handler module 60 having access to the NoSQL database functionality 20, the further query message is solved and/or answered.

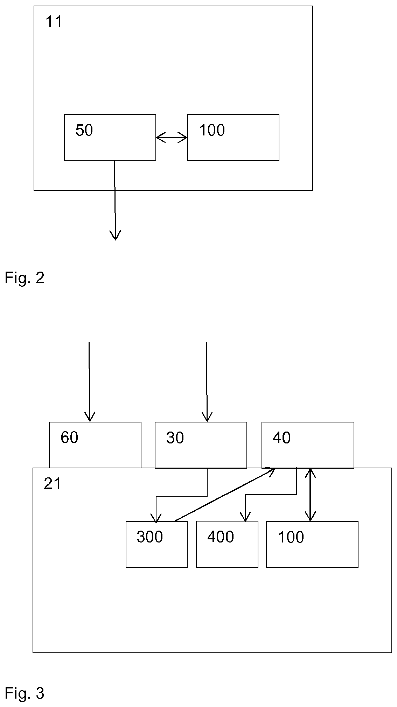

In **Figure 2****,** a specific network node 11 of the plurality of network nodes 11, 12, 13 according to an embodiment of the present invention is schematically illustrated. The specific network node 11 partly comprises a query router module 50 (at least a part thereof). The query router module 50 (or the part of the query router module 50) is configured to route and or transmit a further query message from the specific network node 11 to the database entity 21, 22, 23 of the NoSQL database functionality 20 comprising at least one graph partition 400 of the graph of the further query message, as depicted by the arrow starting at the query router module 50 in Figure 2. Therein, it is possible that the query router module 50 routes/transmits any particular query message from the specific network node 11 to a database entity 21, 22, 23, which comprises a graph partition 400, comprising a vertex referenced in the graph of the particular query message. Furthermore, it is preferred that the specific network node 11 and/or the query router module 50 comprises or has access to a query routing map 100 (or a part thereof). Other network nodes 12, 13 of network nodes 11, 12, 13 can be formed similarly or identically to the specific network node 11.

In **Figure 3****,** a specific database entity 21 of the plurality of database entities 21, 22, 23 according to an embodiment of the present invention is schematically illustrated. A query profile module 30 is at least partly comprised in or associated with the specific database entity 21. Furthermore, a graph partitioning module 40 is at least partly comprised in or associated with the specific database entity 21. Also, a query handler module 60 is at least partly comprised in or associated with the specific database entity 21. An initial graph partition 400 or a modified graph partition 400 (or many initial or modified graph partitions 400) is comprised in the specific database entity 21. The initial graph partition 400 or the modified graph partition 400 is a result of the partitioning of a specific graph of a specific query message of a plurality of query messages or of many specific graphs of query messages of a plurality of query messages the by the graph partitioning module 40 in a second step. Furthermore, workload information 300 is comprised in the specific database entity 21. The workload information 300 is generated by the query profile module 30, after the query profile module tracked and analyzed a plurality of query messages. The workload information 300 concerns a specific vertex referenced in the specific graph of the specific query message of the plurality of query messages and is associated to storing the specific vertex on a specific database entity 21 out of the plurality of database entities 21, 22, 23. In particular, the workload information 300 is a function of the number of query messages of the plurality of query messages referencing the specific vertex, the frequency of query messages of the plurality of query messages referencing the specific vertex and - in case the specific vertex is the first or last vertex of a graph partition 400 - , the workload information 300 is additionally a function of a communication cost value associated with hopping/transitioning to a vertex in a different graph partition 400. It is possible that workload information 300 concerning each vertex referenced in the specific graph of the specific query message is comprised in the specific database entity 21 and also that workload information 300 concerning each vertex referenced in each graph each query message of the plurality of query message is comprised in the specific database entity 21 (especially at least for every vertex that is comprised in the specific database entity 21). Other database entities 22, 23 of the plurality of database entities 21, 22, 23 can be formed similarly or identically to the specific database entities 21.

## Claims

1. Method for an enhanced management of configuration information and/or stateful information in a communication network, wherein the communication network comprises a plurality of network nodes (11, 12, 13) and a distributed NoSQL database functionality (20), wherein the distributed NoSQL database functionality (20) comprises a plurality of database entities (21, 22, 23), wherein query messages between the plurality of network nodes (11, 12, 13) and the NoSQL database functionality (20) are transmitted using a data modeling language with a graph-like or tree-like data structure, wherein the query messages comprise graphs referencing vertices stored in the plurality of database entities (21, 22, 23), wherein a specific graph of a specific query message comprises references to at least two vertices, wherein the at least two vertices referenced in the specific graph are distributed within a group of initial graph partitions (400) across the database entities (21, 22, 23) of the NoSQL database functionality (20) by the following steps:
-- in a first step, a plurality of query messages is tracked and analyzed by a query profile module (30), wherein the query profile module (30) generates workload information (300) for a specific vertex referenced in the specific graph of the specific query message of the plurality of query messages associated to storing the specific vertex on a specific database entity (21) out of the plurality of database entities (21, 22, 23), wherein the workload information (300) for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition (400), the workload information (300) is additionally a function of a communication cost value associated with hopping/transitioning to a vertex in a different graph partition (400),
-- in a second step - after the first step - in dependence of the workload information (300), a partitioning of the specific graph into a group of initial graph partitions (400) is performed by a graph partitioning module (40), wherein each graph partition of the group of initial graph partitions (400) is distributed to at least one different database entity (21, 22, 23) of the plurality of database entities (21, 22, 23),
and/or
wherein the at least two vertices referenced in the specific graph are distributed within a group of modified graph partitions (400) across the database entities (21, 22, 23) of the NoSQL database functionality (20) by the following steps:
-- in a first step, a plurality of query messages is tracked and analyzed by a query profile module (30), wherein the query profile module (30) generates workload information (300) for a specific vertex referenced in the specific graph of the specific query message of the plurality of query messages associated to storing the specific vertex on a specific database entity (21) out of the plurality of database entities (21, 22, 23), wherein the workload information (300) for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition (400), the workload information (300) is additionally a function of a communication cost value associated with hopping/transitioning to a vertex in a different graph partition (400),
-- in a second step - after the first step - in dependence of the workload information (300), a partitioning of the specific graph into a group of modified graph partitions (400) is performed by a graph partitioning module (40), wherein each graph partition (400) of the group of modified graph partitions (400) is distributed to at least one different database entity (21, 22, 23) of the plurality of database entities (21, 22, 23),
wherein a further query message, transmitted from a specific network node(11) of the plurality of network nodes (11, 12, 13) and directed either
-- at editing and/or writing and/or retrieving stateful information in and/or from the NoSQL database functionality (20) or
-- at retrieving configuration information from the NoSQL database functionality (20), is handled by the following steps:
-- in a third step - after the second step - the further query message is transmitted from the specific network node (11) with the help of a query router module (50), wherein the query router module (50) routes the further query message to the database entity (21, 22, 23) comprising at least one graph partition (400) of the graph of the further query message,
-- in a fourth step - after the third step - the further query message is received by specific database entity (21, 22, 23) comprising at least one graph partition (400) of the graph of the further query message, wherein, with the help of a query handler module (60) having access to the NoSQL database functionality (20), the further query message is solved and/or answered.

2. Method according to claim 1, wherein the query router module (50) is at least partly comprised in or associated with the specific network node (11).

3. Method according to any of the preceding claims, wherein the query profile module (30) is at least partly comprised in or associated with the specific database entity (21), wherein especially the query profile module (30) is partly comprised in or associated with each database entity (21, 22, 23) of the plurality of database entities (21, 22, 23), wherein the graph partitioning module (40) is at least partly comprised in or associated with the specific database entity (21), wherein especially the graph partitioning module (40) is partly comprised in or associated with each database entity (21, 22, 23) of the plurality of database entities (21, 22, 23), wherein query handler module (60) is at least partly comprised in or associated with the specific database entity (21), wherein especially the query handler module (60) is partly comprised in or associated with each database entity (21, 22, 23) of the plurality of database entities (21, 22, 23).

4. Method according to any of the preceding claims, wherein the workload information (300) for the specific vertex is further a function of a cost value associated to answering the query messages of the plurality of query messages referencing the specific vertex, wherein especially each query message of the plurality of query messages is weighted with a predefined relative importance value.

5. Method according to any of the preceding claims, wherein the data modeling language with a graph-like or tree-like data structure is YANG and the NoSQL database functionality is a Cassandra-based NoSQL database functionality.

6. Method according to any of the preceding claims, wherein the partitioning of the specific graph into the group of initial graph partitions (400) during the second step is performed such that a workload indicated by the workload information (300) is minimized.

7. Method according to any of the preceding claims, wherein in the first step workload information (300) for a further specific vertex referenced in the specific graph is generated analogous to the generation of the workload information (300) for the specific vertex, wherein especially in the first step workload information (300) for each specific vertex referenced in the specific graph is generated analogous to the generation of the workload information (300) for the specific vertex.

8. Method according to any of the preceding claims, wherein in the first step workload information (300) for each vertex referenced in any of the graphs of the plurality of query messages is generated analogous to the generation of the workload information (300) for the specific vertex, wherein the partitioning of each graph of the plurality of query messages into a respective group of initial graph partitions (400) and/or a respective group of modified graph partitions (400) - in the second step - is performed analogous to the partitioning of the specific graph into the group of initial graph partitions (400) and/or the group of modified graph partitions (400).

9. Method according to any of the preceding claims, wherein after the second step either:
-- the specific vertex is comprised in only one initial graph partition (400) or modified graph partition (400) or
-- the specific vertex is comprised in a plurality of initial graph partitions (400) or modified graph partitions (400).

10. Method according to any of the preceding claims, wherein the partitioning in the second step is performed utilizing a basic partition cut, a complementary partition cut and/or redundant partitioning.

11. System for an enhanced management of configuration information and/or stateful information in a communication network, wherein the communication network comprises a plurality of network nodes (11, 12, 13) and a distributed NoSQL database functionality (20), wherein the distributed NoSQL database functionality (20) comprises a plurality of database entities (21, 22, 23), wherein query messages between the plurality of network nodes (11, 12, 13) and the NoSQL database functionality (20) are transmittable using a data modeling language with a graph-like or tree-like data structure, wherein the query messages comprise graphs referencing vertices stored in the plurality of database entities (21, 22, 23), wherein a specific graph of a specific query message comprises references to at least two vertices, wherein the system is configured to distribute the at least two vertices referenced in the specific graph within a group of initial graph partitions (400) across the database entities (21, 22, 23) of the NoSQL database functionality (20) by:
-- a query profile module (30) is configured to track and analyze a plurality of query, wherein the query profile module (30) is configured to generate workload information (300) for a specific vertex referenced in the specific graph of the specific query message of the plurality of query messages associated to storing the specific vertex on a specific database entity (21) out of the plurality of database entities (21, 22, 23), wherein the workload information (300) for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition (400), the workload information (300) is additionally a function of a communication cost value associated with hopping/transitioning to a vertex in a different graph partition (400),
-- in dependence of the workload information (300), a graph partitioning module (40) is configured to perform a partitioning of the specific graph into a group of initial graph partitions (400), wherein each graph partition (400) of the group of initial graph partitions (400) is configured to be distributed to at least one different database entity (21, 22, 23) of the plurality of database entities (21, 22, 23),
and/or
wherein the system is configured to distribute the at least two vertices referenced in the specific graph within a group of modified graph partitions (400) across the database entities (21, 22, 23) of the NoSQL database functionality (20) by:
-- a query profile module (30) is configured to track and analyze a plurality of query, wherein the query profile module (30) is configured to generate workload information (300) for a specific vertex referenced in the specific graph of the specific query message of the plurality of query messages associated to storing the specific vertex on a specific database entity (21) out of the plurality of database entities (21, 22, 23), wherein the workload information (300) for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition (400), the workload information (300) is additionally a function of a communication cost value associated with hopping/transitioning to a vertex in a different graph partition (400),
-- in dependence of the workload information (300), a graph partitioning module (40) is configured to perform a partitioning of the specific graph into a group of modified graph partitions (400), wherein each graph partition (400) of the group of modified graph partitions (400) is configured to be distributed to at least one different database entity (21, 22, 23) of the plurality of database entities (21, 22, 23), wherein the system is configured to handle a further query message, transmittable from a specific network node(11) of the plurality of network nodes (11, 12, 13) and directed either
-- at editing and/or writing and/or retrieving stateful information in and/or from the NoSQL database functionality (20) or
-- at retrieving configuration information from the NoSQL database functionality (20), by:
-- the further query message is configured to be transmitted from the specific network node (11) with the help of a query router module (50), wherein the query router module (50) is configured to route the further query message to the database entity (21, 22, 23) comprising at least one graph partition (400) of the graph of the further query message,
-- the further query message is configured to be received by specific database entity (21, 22, 23) comprising at least one graph partition (400) of the graph of the further query message, wherein, with the help of a query handler module (60) having access to the NoSQL database functionality (20), the further query message is configured to be solved and/or answered.

12. Program comprising a computer readable program code which, when executed in part on a query profile module (30), a graph partitioning module (40), a query router module (50), a query handler module (60) and/or on a database entity and/or on a network node, causes the query profile module (30), the graph partitioning module (40), the query router module (50), the query handler module (60) and/or the database entity and/or the network node to perform a method according to any one of claims 1 to 10.

13. Computer program product for an enhanced management of configuration information and/or stateful information in a communication network, the computer program product comprising a computer program stored on a storage medium, the computer program comprising program code which, when executed in part on a query profile module (30), a graph partitioning module (40), a query router module (50), a query handler module (60) and/or on a database entity and/or on a network node, causes the query profile module (30), the graph partitioning module (40), the query router module (50), the query handler module (60) and/or the database entity and/or the network node to perform a method according to any one of claims 1 to 10.

## Patentansprüche

1. Verfahren für ein erweitertes Management von Konfigurationsinformation und/oder zustandsorientierten Informationen in einem Kommunikationsnetz, wobei das Kommunikationsnetz mehrere Netzknoten (11, 12, 13) und eine verteilte NoSQL-Datenbankfunktionalität (20) umfasst, wobei die verteilte NoSQL-Datenbankfunktionalität (20) mehrere Datenbankentitäten (21, 22, 23) umfasst, wobei Anfragenachrichten zwischen den mehreren Netzknoten (11, 12, 13) und der NoSQL-Datenbankfunktionalität (20) unter Verwendung einer Datenmodellierungssprache mit einer diagrammartigen oder baumartigen Datenstruktur gesendet werden, wobei die Anfragenachrichten Diagramme umfassen, die auf Scheitelpunkte verweisen, die in den mehreren Datenbankentitäten (21, 22, 23) gespeichert sind, wobei ein spezielles Diagramm einer speziellen Anfragenachricht Verweise auf mindestens zwei Scheitelpunkte umfasst, wobei die mindestens zwei Scheitelpunkte, auf die in dem speziellen Diagramm verwiesen wird, innerhalb einer Gruppe anfänglicher Diagrammpartitionen (400) über die Datenbankentitäten (21, 22, 23) der NoSQL-Datenbankfunktionalität (20) hinweg durch die folgenden Schritte verteilt werden:
- in einem ersten Schritt werden mehrere Anfragenachrichten durch ein Anfrageprofilmodul (30) verfolgt und analysiert, wobei das Anfrageprofilmodul (30) Arbeitslast-Informationen (300) für einen speziellen Scheitelpunkt generiert, auf die in dem speziellen Diagramm der speziellen Anfragenachricht der mehreren Anfragenachrichten verwiesen wird, die mit dem Speichern des speziellen Scheitelpunktes in einer speziellen Datenbankentität (21) aus den mehreren Datenbankentitäten (21, 22, 23) verknüpft ist, wobei die Arbeitslast-Informationen (300) für den speziellen Scheitelpunkt eine Funktion von Folgendem sind:
- der Anzahl von Anfragenachrichten der mehreren Anfragenachrichten, die auf den speziellen Scheitelpunkt verweisen,
- der Häufigkeit von Anfragenachrichten der mehreren Anfragenachrichten, die auf den speziellen Scheitelpunkt verweisen,
- wobei, falls der spezielle Scheitelpunkt der erste oder der letzte Scheitelpunkt einer Diagrammpartition (400) ist, die Arbeitslast-Informationen (300) zusätzlich eine Funktion eines Kommunikationskostenwertes sind, der mit dem Springen oder Übergehen zu einem Scheitelpunkt in einer anderen Diagrammpartition (400) verknüpft ist,
- in einem zweiten Schritt - nach dem ersten Schritt - wird, in Abhängigkeit von den Arbeitslast-Informationen (300), eine Partitionierung des speziellen Diagramms zu einer Gruppe anfänglicher Diagrammpartitionen (400) durch ein Diagrammpartitionierungsmodul (40) ausgeführt, wobei jede Diagrammpartition der Gruppe anfänglicher Diagrammpartitionen (400) zu mindestens einer anderen Datenbankentität (21, 22, 23) der mehreren Datenbankentitäten (21, 22, 23) verteilt wird, und/oder
wobei die mindestens zwei Scheitelpunkte, auf die in dem speziellen Diagramm verwiesen wird, innerhalb einer Gruppe modifizierter Diagrammpartitionen (400) über die Datenbankentitäten (21, 22, 23) der NoSQL-Datenbankfunktionalität (20) hinweg durch die folgenden Schritte verteilt werden:
- in einem ersten Schritt werden mehrere Anfragenachrichten durch ein Anfrageprofilmodul (30) verfolgt und analysiert, wobei das Anfrageprofilmodul (30) Arbeitslast-Informationen (300) für einen speziellen Scheitelpunkt generiert, auf die in dem speziellen Diagramm der speziellen Anfragenachricht der mehreren Anfragenachrichten verwiesen wird, die mit dem Speichern des speziellen Scheitelpunktes in einer speziellen Datenbankentität (21) aus den mehreren Datenbankentitäten (21, 22, 23) verknüpft ist, wobei die Arbeitslast-Informationen (300) für den speziellen Scheitelpunkt eine Funktion von Folgendem sind:
- der Anzahl von Anfragenachrichten der mehreren Anfragenachrichten, die auf den speziellen Scheitelpunkt verweisen,
- der Häufigkeit von Anfragenachrichten der mehreren Anfragenachrichten, die auf den speziellen Scheitelpunkt verweisen,
- wobei, falls der spezielle Scheitelpunkt der erste oder der letzte Scheitelpunkt einer Diagrammpartition (400) ist, die Arbeitslast-Informationen (300) zusätzlich eine Funktion eines Kommunikationskostenwertes sind, der mit dem Springen oder Übergehen zu einem Scheitelpunkt in einer anderen Diagrammpartition (400) verknüpft ist,
- in einem zweiten Schritt - nach dem ersten Schritt - wird, in Abhängigkeit von den Arbeitslast-Informationen (300), eine Partitionierung des speziellen Diagramms in einer Gruppe modifizierter Diagrammpartitionen (400) durch ein Diagrammpartitionierungsmodul (40) ausgeführt, wobei jede Diagrammpartition (400) der Gruppe modifizierter Diagrammpartitionen (400) zu mindestens einer anderen Datenbankentität (21, 22, 23) der mehreren Datenbankentitäten (21, 22, 23) verteilt wird,
wobei eine weitere Anfragenachricht, die von einem speziellen Netzknoten (11) der mehreren Netzknoten (11, 12, 13) gesendet wird und entweder
- auf das Editieren und/oder Schreiben und/oder Abrufen zustandsorientierter Informationen in und/oder aus der NoSQL-Datenbankfunktionalität (20) oder
- auf das Abrufen von Konfigurationsinformation aus der NoSQL-Datenbankfunktionalität (20) gerichtet ist, durch die folgenden Schritte gehandhabt wird:
- in einem dritten Schritt - nach dem zweiten Schritt - wird die weitere Anfragenachricht von dem speziellen Netzknoten (11) mit Hilfe eines Anfrageroutermoduls (50) gesendet, wobei das Anfrageroutermodul (50) die weitere Anfragenachricht zu der Datenbankentität (21, 22, 23) routet, die mindestens eine Diagrammpartition (400) des Diagramms der weiteren Anfragenachricht umfasst,
- in einem vierten Schritt - nach dem dritten Schritt - wird die weitere Anfragenachricht durch die spezielle Datenbankentität (21, 22, 23) empfangen, die mindestens eine Diagrammpartition (400) des Diagramms der weiteren Anfragenachricht umfasst, wobei mit Hilfe eines Anfragehandhabungsmoduls (60), das Zugriff auf die NoSQL-Datenbankfunktionalität (20) hat, die weitere Anfragenachricht gelöst und/oder beantwortet wird.

2. Verfahren nach Anspruch 1, wobei das Anfrageroutermodul (50) mindestens teilweise in dem speziellen Netzknoten (11) enthalten oder mit diesem verknüpft ist.

3. Verfahren nach einem der vorangehenden Ansprüche, wobei das Anfrageprofilmodul (30) mindestens teilweise in der speziellen Datenbankentität (21) enthalten oder mit dieser verknüpft ist, wobei insbesondere das Anfrageprofilmodul (30) teilweise in jeder Datenbankentität (21, 22, 23) der mehreren Datenbankentitäten (21, 22, 23) enthalten oder damit verknüpft ist, wobei das Diagrammpartitionierungsmodul (40) mindestens teilweise in der speziellen Datenbankentität (21) enthalten oder mit dieser verknüpft ist, wobei insbesondere das Diagrammpartitionierungsmodul (40) teilweise in jeder Datenbankentität (21, 22, 23) der mehreren Datenbankentitäten (21, 22, 23) enthalten oder damit verknüpft ist, wobei das Anfragehandhabungsmodul (60) mindestens teilweise in der speziellen Datenbankentität (21) enthalten oder mit dieser verknüpft ist, wobei insbesondere das Anfragehandhabungsmodul (60) teilweise in jeder Datenbankentität (21, 22, 23) der mehreren Datenbankentitäten (21, 22, 23) enthalten oder damit verknüpft ist.

4. Verfahren nach einem der vorangehenden Ansprüche, wobei die Arbeitslast-Informationen (300) für den speziellen Scheitelpunkt des Weiteren eine Funktion eines Kostenwertes sind, der mit der Beantwortung der Anfragenachrichten der mehreren Anfragenachrichten, die auf den speziellen Scheitelpunkt verweisen, verknüpft ist, wobei insbesondere jede Anfragenachricht der mehreren Anfragenachrichten mit einem zuvor festgelegten relativen Wichtigkeitswert gewichtet wird.

5. Verfahren nach einem der vorangehenden Ansprüche, wobei die Datenmodellierungssprache mit einer diagrammartigen oder baumartigen Datenstruktur YANG ist und die NoSQL-Datenbankfunktionalität eine Cassandra-basierte NoSQL-Datenbankfunktionalität ist.

6. Verfahren nach einem der vorangehenden Ansprüche, wobei die Partitionierung des speziellen Diagramms zu der Gruppe anfänglicher Diagrammpartitionen (400) während des zweiten Schrittes ausgeführt wird, dergestalt, dass eine durch die Arbeitslast-Informationen (300) angezeigte Arbeitslast minimiert wird.

7. Verfahren nach einem der vorangehenden Ansprüche, wobei in dem ersten Schritt Arbeitslast-Informationen (300) für einen weiteren speziellen Scheitelpunkt, auf den in dem speziellen Diagramm verwiesen wird, analog dem Generieren der Arbeitslast-Informationen (300) für den speziellen Scheitelpunkt generiert werden, wobei insbesondere in dem ersten Schritt Arbeitslast-Informationen (300) für jeden speziellen Scheitelpunkt, auf den in dem speziellen Diagramm verwiesen wird, analog dem Generieren der Arbeitslast-Informationen (300) für den speziellen Scheitelpunkt generiert werden.

8. Verfahren nach einem der vorangehenden Ansprüche, wobei in dem ersten Schritt Arbeitslast-Informationen (300) für jeden Scheitelpunkt, auf den in einem der Diagramme der mehreren Anfragenachrichten verwiesen wird, analog dem Generieren der Arbeitslast-Informationen (300) für den speziellen Scheitelpunkt generiert werden, wobei die Partitionierung jedes Diagramms der mehreren Anfragenachrichten zu einer jeweiligen Gruppe anfänglicher Diagrammpartitionen (400) und/oder einer jeweiligen Gruppe modifizierter Diagrammpartitionen (400) - in dem zweiten Schritt - analog dem Partitionieren des speziellen Diagramms in der Gruppe anfänglicher Diagrammpartitionen (400) und/oder der Gruppe modifizierter Diagrammpartitionen (400) ausgeführt wird.

9. Verfahren nach einem der vorangehenden Ansprüche, wobei nach dem zweiten Schritt entweder:
- der spezielle Scheitelpunkt in nur einer anfänglichen Diagrammpartition (400) oder modifizierten Diagrammpartition (400) enthalten ist, oder
- der spezielle Scheitelpunkt in mehreren anfänglichen Diagrammpartitionen (400) oder modifizierten Diagrammpartitionen (400) enthalten ist.

10. Verfahren nach einem der vorangehenden Ansprüche, wobei die Partitionierung in dem zweiten Schritt unter Verwendung eines Basispartitionsschnittes, eines komplementären Partitionsschnittes und/oder einer redundanten Partitionierung ausgeführt wird.

11. System für ein erweitertes Management von Konfigurationsinformation und/oder zustandsorientierten Informationen in einem Kommunikationsnetz, wobei das Kommunikationsnetz mehrere Netzknoten (11, 12, 13) und eine verteilte NoSQL-Datenbankfunktionalität (20) umfasst, wobei die verteilte NoSQL-Datenbankfunktionalität (20) mehrere Datenbankentitäten (21, 22, 23) umfasst, wobei Anfragenachrichten zwischen den mehreren Netzknoten (11, 12, 13) und der NoSQL-Datenbankfunktionalität (20) unter Verwendung einer Datenmodellierungssprache mit einer diagrammartigen oder baumartigen Datenstruktur gesendet werden können, wobei die Anfragenachrichten Diagramme umfassen, die auf Scheitelpunkte verweisen, die in den mehreren Datenbankentitäten (21, 22, 23) gespeichert sind, wobei ein spezielles Diagramm einer speziellen Anfragenachricht Verweise auf mindestens zwei Scheitelpunkte umfasst, wobei das System dafür ausgestaltet ist, die mindestens zwei Scheitelpunkte, auf die in dem speziellen Diagramm verwiesen wird, innerhalb einer Gruppe anfänglicher Diagrammpartitionen (400) über die Datenbankentitäten (21, 22, 23) der NoSQL-Datenbankfunktionalität (20) hinweg zu verteilen durch:
- ein Anfrageprofilmodul (30), das dafür ausgestaltet ist, mehrere Anfragen zu verfolgen und zu analysieren, wobei das Anfrageprofilmodul (30) dafür ausgestaltet ist, Arbeitslast-Informationen (300) für einen speziellen Scheitelpunkt zu generieren, auf den in dem speziellen Diagramm der speziellen Anfragenachricht der mehreren Anfragenachrichten verwiesen wird, die mit dem Speichern des speziellen Scheitelpunktes in einer speziellen Datenbankentität (21) aus den mehreren Datenbankentitäten (21, 22, 23) verknüpft ist, wobei die Arbeitslast-Informationen (300) für den speziellen Scheitelpunkt eine Funktion von Folgendem sind:
- der Anzahl von Anfragenachrichten der mehreren Anfragenachrichten, die auf den speziellen Scheitelpunkt verweisen,
- der Häufigkeit von Anfragenachrichten der mehreren Anfragenachrichten, die auf den speziellen Scheitelpunkt verweisen,
- wobei, falls der spezielle Scheitelpunkt der erste oder der letzte Scheitelpunkt einer Diagrammpartition (400) ist, die Arbeitslast-Informationen (300) zusätzlich eine Funktion eines Kommunikationskostenwertes sind, der mit dem Springen oder Übergehen zu einem Scheitelpunkt in einer anderen Diagrammpartition (400) verknüpft ist,
- wobei in Abhängigkeit von den Arbeitslast-Informationen (300) ein Diagrammpartitionierungsmodul (40) dafür ausgestaltet ist, ein Partitionieren des speziellen Diagramms zu einer Gruppe anfänglicher Diagrammpartitionen (400) auszuführen, wobei jede Diagrammpartition (400) der Gruppe anfänglicher Diagrammpartitionen (400) dafür ausgestaltet ist, zu mindestens einer anderen Datenbankentität (21, 22, 23) der mehreren Datenbankentitäten (21, 22, 23) verteilt zu werden, und/oder
wobei das System dafür ausgestaltet ist, die mindestens zwei Scheitelpunkte, auf die in dem speziellen Diagramm verwiesen wird, innerhalb einer Gruppe modifizierter Diagrammpartitionen (400) über die Datenbankentitäten (21, 22, 23) der NoSQL-Datenbankfunktionalität (20) hinweg zu verteilen durch:
- ein Anfrageprofilmodul (30), das dafür ausgestaltet ist, mehrere Anfragen zu verfolgen und zu analysieren, wobei das Anfrageprofilmodul (30) dafür ausgestaltet ist, Arbeitslast-Informationen (300) für einen speziellen Scheitelpunkt zu generieren, auf den in dem speziellen Diagramm der speziellen Anfragenachricht der mehreren Anfragenachrichten verwiesen wird, die mit dem Speichern des speziellen Scheitelpunktes in einer speziellen Datenbankentität (21) aus den mehreren Datenbankentitäten (21, 22, 23) verknüpft ist, wobei die Arbeitslast-Informationen (300) für den speziellen Scheitelpunkt eine Funktion von Folgendem sind:
- der Anzahl von Anfragenachrichten der mehreren Anfragenachrichten, die auf den speziellen Scheitelpunkt verweisen,
- der Häufigkeit von Anfragenachrichten der mehreren Anfragenachrichten, die auf den speziellen Scheitelpunkt verweisen,
- wobei, falls der spezielle Scheitelpunkt der erste oder der letzte Scheitelpunkt einer Diagrammpartition (400) ist, die Arbeitslast-Informationen (300) zusätzlich eine Funktion eines Kommunikationskostenwertes sind, der mit dem Springen oder Übergehen zu einem Scheitelpunkt in einer anderen Diagrammpartition (400) verknüpft ist,
- wobei in Abhängigkeit von den Arbeitslast-Informationen (300) ein Diagrammpartitionierungsmodul (40) dafür ausgestaltet ist, ein Partitionieren des speziellen Diagramms in einer Gruppe modifizierter Diagrammpartitionen (400) auszuführen, wobei jede Diagrammpartition (400) der Gruppe modifizierter Diagrammpartitionen (400) dafür ausgestaltet ist, zu mindestens einer anderen Datenbankentität (21, 22, 23) der mehreren Datenbankentitäten (21, 22, 23) verteilt zu werden, wobei das System dafür ausgestaltet ist, eine weitere Anfragenachricht, die von einem speziellen Netzknoten (11) der mehreren Netzknoten (11, 12, 13) gesendet werden kann und entweder
- auf ein Editieren und/oder Schreiben und/oder Abrufen zustandsorientierter Informationen in und/oder aus der NoSQL-Datenbankfunktionalität (20) oder
- auf ein Abrufen von Konfigurationsinformation aus der NoSQL-Datenbankfunktionalität (20) gerichtet ist, dadurch zu handhaben, dass:
- die weitere Anfragenachricht dafür ausgestaltet ist, von dem speziellen Netzknoten (11) mit Hilfe eines Anfrageroutermoduls (50) gesendet zu werden, wobei das Anfrageroutermodul (50) dafür ausgestaltet ist, die weitere Anfragenachricht zu der Datenbankentität (21, 22, 23) zu routen, die mindestens eine Diagrammpartition (400) des Diagramms der weiteren Anfragenachricht umfasst,
- die weitere Anfragenachricht dafür ausgestaltet ist, durch eine spezielle Datenbankentität (21, 22, 23) empfangen zu werden, die mindestens eine Diagrammpartition (400) des Diagramms der weiteren Anfragenachricht umfasst, wobei mit Hilfe eines Anfragehandhabungsmoduls (60), das Zugriff auf die NoSQL-Datenbankfunktionalität (20) hat, die weitere Anfragenachricht dafür ausgestaltet ist, gelöst und/oder beantwortet zu werden.

12. Programm, das einen computerlesbaren Programmcode umfasst, der, wenn er zum Teil in einem Anfrageprofilmodul (30), einem Diagrammpartitionierungsmodul (40), einem Anfrageroutermodul (50), einem Anfragehandhabungsmodul (60) und/oder in einer Datenbankentität und/oder in einem Netzknoten ausgeführt wird, veranlasst, dass das Anfrageprofilmodul (30), das Diagrammpartitionierungsmodul (40), das Anfrageroutermodul (50), das Anfragehandhabungsmodul (60) und/oder die Datenbankentität und/oder der Netzknoten ein Verfahren nach einem der Ansprüche 1 bis 10 ausführen.

13. Computerprogrammprodukt für ein erweitertes Management von Konfigurationsinformation und/oder zustandsorientierten Informationen in einem Kommunikationsnetz, wobei das Computerprogrammprodukt ein Computerprogramm umfasst, das auf einem Speichermedium gespeichert ist, wobei das Computerprogramm Programmcode umfasst, der, wenn er zum Teil in einem Anfrageprofilmodul (30), einem Diagrammpartitionierungsmodul (40), einem Anfrageroutermodul (50), einem Anfragehandhabungsmodul (60) und/oder in einer Datenbankentität und/oder in einem Netzknoten ausgeführt wird, veranlasst, dass das Anfrageprofilmodul (30), das Diagrammpartitionierungsmodul (40), das Anfrageroutermodul (50), das Anfragehandhabungsmodul (60) und/oder die Datenbankentität und/oder der Netzknoten ein Verfahren nach einem der Ansprüche 1 bis 10 ausführen.

## Revendications

1. Procédé de gestion améliorée d'une information de configuration et/ou d'une information à état dans un réseau de communication, dans lequel le réseau de communication comprend une pluralité de noeuds de réseau (11, 12, 13) et une fonctionnalité de base de données NoSQL distribuée (20), dans lequel la fonctionnalité de base de données NoSQL distribuée (20) comprend une pluralité d'entités de base de données (21, 22, 23), dans lequel des messages d'interrogation entre la pluralité de noeuds de réseau (11, 12, 13) et la fonctionnalité de base de données NoSQL (20) sont transmis à l'aide d'un langage de modélisation de données avec une structure de données de type graphe ou de type arborescence, dans lequel les messages d'interrogation comprennent des graphes référençant des sommets stockés dans la pluralité d'entités de base de données (21, 22, 23), dans lequel un graphe spécifique d'un message d'interrogation spécifique comprend des références à au moins deux sommets, dans lequel les au moins deux sommets référencés dans le graphe spécifique sont distribués au sein d'un groupe de partitions de graphe initiales (400) entre les entités de base de données (21, 22, 23) de la fonctionnalité de base de données NoSQL (20) par les étapes suivantes :
- dans une première étape, une pluralité de messages d'interrogation est suivie et analysée par un module de profil d'interrogation (30), dans lequel le module de profil d'interrogation (30) génère une information de charge de travail (300) pour un sommet spécifique référencé dans le graphe spécifique du message d'interrogation spécifique de la pluralité de messages d'interrogation associés au stockage du sommet spécifique sur une entité de base de données spécifique(21) parmi la pluralité d'entités de base de données (21, 22, 23), dans lequel l'information de charge de travail (300) pour le sommet spécifique est fonction
- du nombre de messages d'interrogation de la pluralité de messages d'interrogation référençant le sommet spécifique,
- de la fréquence de messages d'interrogation de la pluralité de messages d'interrogation référençant le sommet spécifique,
- dans lequel, dans le cas où le sommet spécifique est le premier ou le dernier sommet d'une partition de graphe (400), l'information de charge de travail (300) est en outre fonction d'une valeur de coût de communication associée à un saut/passage à un sommet dans une partition de graphe différente (400),
- dans une deuxième étape - après la première étape - selon l'information de charge de travail (300), un partitionnement du graphe spécifique en un groupe de partitions de graphe initiales (400) est effectué par un module de partitionnement de graphe (400), dans lequel chaque partition de graphe du groupe de partitions de graphe initiales (400) est distribuée à au moins une entité de base de données différente (21, 22, 23) de la pluralité d'entités de base de données (21, 22, 23),
et/ou dans lequel les au moins deux sommets référencés dans le graphe spécifique sont distribués au sein d'un groupe de partitions de graphe modifiées (400) entre les entités de base de données (21, 22, 23) de la fonctionnalité de base de données NoSQL (20) par les étapes suivantes :
- dans une première étape, une pluralité de messages d'interrogation est suivie et analysée par un module de profil d'interrogation (30), dans lequel le module de profil d'interrogation (30) génère une information de charge de travail (300) pour un sommet spécifique référencé dans le graphe spécifique du message d'interrogation spécifique de la pluralité de messages d'interrogation associés au stockage du sommet spécifique sur une entité de base de données spécifique (21) parmi la pluralité d'entités de base de données (21, 22, 23), dans lequel l'information de charge de travail (300) pour le sommet spécifique est fonction
- du nombre de messages d'interrogation de la pluralité de messages d'interrogation référençant le sommet spécifique,
- de la fréquence de messages d'interrogation de la pluralité de messages d'interrogation référençant le sommet spécifique,
- dans lequel, dans le cas où le sommet spécifique est le premier ou le dernier sommet d'une partition de graphe (400), l'information de charge de travail (300) est en outre fonction d'une valeur de coût de communication associée à un saut/passage à un sommet dans une partition de graphe différente (400),
- dans une deuxième étape - après la première étape - selon l'information de charge de travail (300), un partitionnement du graphe spécifique en un groupe de partitions de graphe modifiées (400) est effectué par un module de partitionnement de graphe (40), dans lequel chaque partition de graphe (400) du groupe de partitions de graphe modifiées (400) est distribuée à au moins une entité de base de données différente (21, 22, 23) de la pluralité d'entités de base de données (21, 22, 23),
dans lequel un message d'interrogation supplémentaire, transmis depuis un noeud de réseau spécifique (11) de la pluralité de noeuds de réseau (11, 12, 13) et visant soit
- à éditer et/ou écrire et/ou récupérer une information à état dans et/ou depuis la fonctionnalité de base de données NoSQL (20) soit
- à récupérer une information de configuration depuis la fonctionnalité de base de données NoSQL (20), est écoulé par les étapes suivantes :
- dans une troisième étape - après la deuxième étape - le message d'interrogation supplémentaire est transmis depuis le noeud de réseau spécifique (11) avec l'aide d'un module de routeur d'interrogation (50), dans lequel le module de routeur d'interrogation (50) achemine le message d'interrogation supplémentaire vers l'entité de base de données (21, 22, 23) comprenant au moins une partition de graphe (400) du graphe du message d'interrogation supplémentaire,
- dans une quatrième étape - après la troisième étape - le message d'interrogation supplémentaire est reçu par une entité de base de données spécifique (21, 22, 23) comprenant au moins une partition de graphe (400) du graphe du message d'interrogation supplémentaire, dans lequel, avec l'aide d'un module d'écoulement d'interrogation (60) ayant accès à la fonctionnalité de base de données NoSQL (20), le message d'interrogation supplémentaire est résolu et/ou reçoit une réponse.

2. Procédé selon la revendication 1, dans lequel le module routeur d'interrogation (50) est au moins en partie compris dans ou associé au noeud de réseau spécifique (11).

3. Procédé selon l'une quelconque des revendications précédentes, dans lequel le module de profil d'interrogation (30) est au moins en partie compris dans ou associé à l'entité de base de données spécifique (21), dans lequel notamment le module de profil d'interrogation (30) est en partie compris dans ou associé à chaque entité de base de données (21, 22, 23) de la pluralité d'entités de base de données (21, 22, 23), dans lequel le module de partitionnement de graphe (40) est au moins en partie compris dans ou associé à l'entité de base de données spécifique (21), dans lequel notamment le module de partitionnement de graphe (40) est en partie compris dans ou associé à chaque entité de base de données (21, 22, 23) de la pluralité d'entités de base de données (21, 22, 23), dans lequel un module d'écoulement d'interrogation (60) est au moins en partie compris dans ou associé à l'entité de base de données spécifique (21), dans lequel notamment le module d'écoulement d'interrogation (60) est en partie compris dans ou associé à chaque entité de base de données (21, 22, 23) de la pluralité d'entités de base de données (21, 22, 23).

4. Procédé selon l'une quelconque des revendications précédentes, dans lequel l'information de charge de travail (300) pour le sommet spécifique est en outre fonction d'une valeur de coût associée à la réponse aux messages d'interrogation de la pluralité de messages d'interrogation référençant le sommet spécifique, dans lequel notamment chaque message d'interrogation de la pluralité de messages d'interrogation est pondéré avec une valeur d'importance relative prédéfinie.

5. Procédé selon l'une quelconque des revendications précédentes, dans lequel le langage de modélisation de données avec une structure de données de type graphe ou de type arborescence est YANG et la fonctionnalité de base de données NoSQL est une fonctionnalité de base de données NoSQL par Cassandra.

6. Procédé selon l'une quelconque des revendications précédentes, dans lequel le partitionnement du graphe spécifique en le groupe de partitions de graphe initiales (400) pendant la deuxième étape est effectué de sorte qu'une charge de travail indiquée par l'information de charge de travail (300) soit minimisée.

7. Procédé selon l'une quelconque des revendications précédentes, dans lequel dans la première étape, une information de charge de travail (300) pour un sommet spécifique supplémentaire référencé dans le graphe spécifique est générée de façon analogue à la génération de l'information de charge de travail (300) pour le sommet spécifique, dans lequel notamment dans la première étape, une information de charge de travail (300) pour chaque sommet spécifique référencé dans le graphe spécifique est générée de façon analogue à la génération de l'information de charge de travail (300) pour le sommet spécifique.

8. Procédé selon l'une quelconque des revendications précédentes, dans lequel dans la première étape, une information de charge de travail (300) pour chaque sommet référencé dans l'un quelconque des graphes de la pluralité de messages d'interrogation est générée de façon analogue à la génération de l'information de charge de travail (300) pour le sommet spécifique, dans lequel le partitionnement de chaque graphe de la pluralité de messages d'interrogation en un groupe respectif de partitions de graphe initiales (400) et/ou un groupe respectif de partitions de graphe modifiées (400) - dans la deuxième étape - est effectué de façon analogue au partitionnement du graphe spécifique en le groupe de partitions de graphe initiales (400) et/ou le groupe de partitions de graphe modifiées (400).

9. Procédé selon l'une quelconque des revendications précédentes, dans lequel après la deuxième étape soit :
- le sommet spécifique est compris uniquement dans une partition de graphe initiale (400) ou une partition de graphe modifiée (400) soit
- le sommet spécifique est compris dans une pluralité de partitions de graphe initiales (400) ou de partitions de graphe modifiées (400).

10. Procédé selon l'une quelconque des revendications précédentes, dans lequel le partitionnement dans la deuxième étape est effectué en employant une coupe de partition de base, une coupe de partition complémentaire et/ou un partitionnement redondant.

11. Système de gestion améliorée d'une information de configuration et/ou d'une information à état dans un réseau de communication, dans lequel le réseau de communication comprend une pluralité de noeuds de réseau (11, 12, 13) et une fonctionnalité de base de données NoSQL distribuée (20), dans lequel la fonctionnalité de base de données NoSQL distribuée (20) comprend une pluralité d'entités de base de données (21, 22, 23), dans lequel des messages d'interrogation entre la pluralité de noeuds de réseau (11, 12, 13) et la fonctionnalité de base de données NoSQL (20) peuvent être transmis à l'aide d'un langage de modélisation de données avec une structure de données de type graphe ou de type arborescence, dans lequel les messages d'interrogation comprennent des graphes référençant des sommets stockés dans la pluralité d'entités de base de données (21, 22, 23), dans lequel un graphe spécifique d'un message d'interrogation spécifique comprend des références à au moins deux sommets, dans lequel le système est configuré pour distribuer les au moins deux sommets référencés dans le graphe spécifique au sein d'un groupe de partitions de graphe initiales (400) entre les entités de base de données (21, 22, 23) de la fonctionnalité de base de données NoSQL (20) par :
- un module de profil d'interrogation (30) qui est configuré pour suivre et analyser une pluralité d'interrogations, dans lequel le module de profil d'interrogation (30) est configuré pour générer une information de charge de travail (300) pour un sommet spécifique référencé dans le graphe spécifique du message d'interrogation spécifique de la pluralité de messages d'interrogation associés au stockage du sommet spécifique sur une entité de base de données spécifique (21) parmi la pluralité d'entités de base de données (21, 22, 23), dans lequel l'information de charge de travail (300) pour le sommet spécifique est fonction
- du nombre de messages d'interrogation de la pluralité de messages d'interrogation référençant le sommet spécifique,
- de la fréquence de messages d'interrogation de la pluralité de messages d'interrogation référençant le sommet spécifique,
- dans lequel, dans le cas où le sommet spécifique est le premier ou le dernier sommet d'une partition de graphe (400), l'information de charge de travail (300) est en outre fonction d'une valeur de coût de communication associée à un saut/passage à un sommet dans une partition de graphe différente (400),
- selon l'information de charge de travail (300), un module de partitionnement de graphe (40) est configuré pour effectuer un partitionnement du graphe spécifique en un groupe de partitions de graphe initiales (400), dans lequel chaque partition de graphe (400) du groupe de partitions de graphe initiales (400) est configurée pour être distribuée à au moins une entité de base de données différente (21, 22, 23) de la pluralité d'entités de base de données (21, 22, 23),
et/ou
dans lequel le système est configuré pour distribuer les au moins deux sommets référencés dans le graphe spécifique au sein d'un groupe de partitions de graphe modifiées (400) entre les entités de base de données (21, 22, 23) de la fonctionnalité de base de données NoSQL (20) par :
- un module de profil d'interrogation (30) qui est configuré pour suivre et analyser une pluralité d'interrogations, dans lequel le module de profil d'interrogation (30) est configuré pour générer une information de charge de travail (300) pour un sommet spécifique référencé dans le graphe spécifique du message d'interrogation spécifique de la pluralité de messages d'interrogation associés au stockage du sommet spécifique sur une entité de base de données spécifique (21) parmi la pluralité d'entités de base de données (21, 22, 23), dans lequel l'information de charge de travail (300) pour le sommet spécifique est fonction
- du nombre de messages d'interrogation de la pluralité de messages d'interrogation référençant le sommet spécifique,
- de la fréquence de messages d'interrogation de la pluralité de messages d'interrogation référençant le sommet spécifique,
- dans lequel, dans le cas où le sommet spécifique est le premier ou le dernier sommet d'une partition de graphe (400), l'information de charge de travail (300) est en outre fonction d'une valeur de coût de communication associée à un saut/passage à un sommet dans une partition de graphe différente (400),
- selon l'information de charge de travail (300), un module de partitionnement de graphe (40) est configuré pour effectuer un partitionnement du graphe spécifique en un groupe de partitions de graphe modifiées (400), dans lequel chaque partition de graphe (400) du groupe de partitions de graphe modifiées (400) est configurée pour être distribuée à au moins une entité de base de données différente (21, 22, 23) de la pluralité d'entités de base de données (21, 22, 23),
dans lequel le système est configuré pour écouler un message d'interrogation supplémentaire, pouvant être transmis depuis un noeud de réseau spécifique (11) de la pluralité de noeuds de réseau (11, 12, 13) et visant soit
- à éditer et/ou écrire et/ou récupérer des informations à état dans et/ou depuis la fonctionnalité de base de données NoSQL (20) soit
- à récupérer une information de configuration depuis la fonctionnalité de base de données NoSQL (20), par :
- le message d'interrogation supplémentaire qui est configuré pour être transmis depuis le noeud de réseau spécifique (11) avec l'aide d'un module de routeur d'interrogation (50), dans lequel le module de routeur d'interrogation (50) est configuré pour acheminer le message d'interrogation supplémentaire vers l'entité de base de données (21, 22, 23) comprenant au moins une partition de graphe (400) du graphe du message d'interrogation supplémentaire,
- le message d'interrogation supplémentaire qui est configuré pour être reçu par une entité de base de données spécifique (21, 22, 23) comprenant au moins une partition de graphe (400) du graphe du message d'interrogation supplémentaire, dans lequel, avec l'aide d'un module d'écoulement d'interrogation (60) ayant accès à la fonctionnalité de base de données NoSQL (20), le message d'interrogation supplémentaire est configuré pour être résolu et/ou recevoir une réponse.

12. Programme comprenant un code de programme lisible par ordinateur qui, lorsqu'il est exécuté en partie sur un module de profil d'interrogation (30), un module de partitionnement de graphe (40), un module de routeur d'interrogation (50), un module d'écoulement d'interrogation (60) et/ou sur une entité de base de données et/ou sur un noeud de réseau, amène le module de profil d'interrogation (30), le module de partitionnement de graphe (40), le module de routeur d'interrogation (50), le module d'écoulement d'interrogation (60) et/ou l'entité de base de données et/ou le noeud de réseau à effectuer un procédé selon l'une quelconque des revendications 1 à 10.

13. Produit-programme d'ordinateur pour une gestion améliorée d'une information de configuration et/ou d'une information à état dans un réseau de communication, le produit-programme d'ordinateur comprenant un programme d'ordinateur stocké sur un support de stockage, le programme d'ordinateur comprenant un code de programme qui, lorsqu'il est exécuté en partie sur un module de profil d'interrogation (30), un module de partitionnement de graphe (40), un module de routeur d'interrogation (50), un module d'écoulement d'interrogation (60) et/ou sur une entité de base de données et/ou sur un noeud de réseau, amène le module de profil d'interrogation (30), le module de partitionnement de graphe (40), le module de routeur d'interrogation (50), le module d'écoulement d'interrogation (60) et/ou l'entité de base de données et/ou le noeud de réseau à effectuer un procédé selon l'une quelconque des revendications 1 à 10.
